# EUROPEAN PATENT APPLICATION

(11) **EP 4 415 425 A1**
(43) Date of publication of application: **14.08.2024**
(21) Application number: 21959741.6
(22) Date of filing: 09.10.2021
(51) Int. Cl.: H04W 36/00

(54) **METHOD AND APPARATUS FOR RECEIVING OR SENDING MEASUREMENT CONFIGURATION INFORMATION, DEVICE, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2021/122927
(87) International publication number: WO 2023/056651

(57) **Abstract**

The present disclosure relates to the technical field of wireless communications, and provides a method and apparatus for transmitting measurement configuration information, a device, and a storage medium. The method comprises: receiving measurement configuration information from a network device, wherein the measurement configuration information comprises more than one SSB-based measurement timing configuration (SMTC) corresponding to a same measurement object, and the SMTCs of different neighbor cells to be measured corresponding to the same measurement object are different; and measuring, according to the measurement configuration information, said neighbor cells corresponding to the measurement object. In the present disclosure, different SMTCs are set for different neighbor cells to be measured corresponding to a same measurement object, so that a user equipment can measure said different neighbor cells under a same carrier at different moments, and wherein there is a large transmission delay difference between different cells, the measurement of the neighbor cells can still be completed, thereby solving the problem that the measurement of neighbor cells cannot be completed due to a large transmission delay difference between different cells.

## Description

### TECHNICAL FIELD

The disclosure relates to the field of wireless communication technologies, and in particular, to a method and an apparatus for receiving or sending measurement configuration information, a device, and a storage medium.

### BACKGROUND

In Non-Terrestrial Networks (NTN), a transmission delay difference between satellites in different orbits is relatively large, with a maximum of several hundred milliseconds.

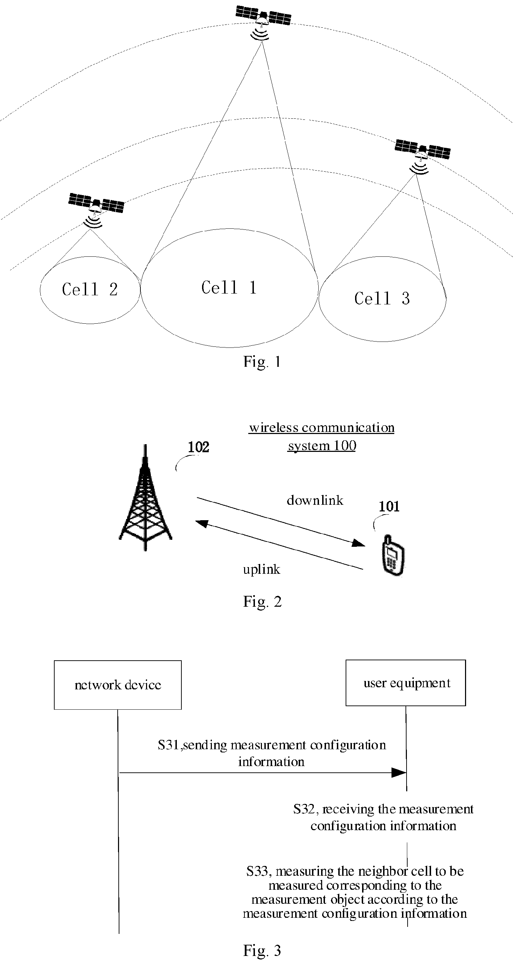

As shown in Fig.1, the first cell Cell1 is adjacent to the second cell Cell2, where the first cell Cell1 corresponds to the first satellite and the second cell Cell2 corresponds to the second satellite, the first satellite and the second satellite are in different orbits, and the transmission delay difference between the first and second satellites is large. When the User Equipment (UE) is about to enter Cell2 from Cell1, due to the large transmission delay difference between the first and second satellites, the UE will not be able to accurately measure the target cell cell2 based on the existing measurement configuration mechanism.

Therefore, the technical issue that needs to be addressed is the inability to complete measurement on the neighbor cell due to the large transmission delay difference.

### SUMMARY

In view of this, the present disclosure provides a method and an apparatus for receiving or sending measurement configuration information, a device and a storage medium.

In a first aspect, there is provided a method for receiving measurement configuration information. The method is performed by a user equipment, and includes:
receiving measurement configuration information from a network device, wherein the measurement configuration information includes more than one SSB-based measurement timing configuration (SMTC) corresponding to a same measurement object, and SMTCs of different neighbor cells to be measured corresponding to the same measurement object are different;
measuring the neighbor cell to be measured corresponding to the measurement object according to the measurement configuration information.

In embodiments of the present disclosure, different SMTCs are set for different neighbor cells to be measured corresponding to the same measurement object, allowing the user equipment to measure different neighbor cells under the same carrier at different moments. Even when the transmission delay difference between different cells is large, the measurement of the neighbor cell can still be completed, thus overcoming the problem of inability to complete measurement of the neighbor cell due to the large transmission delay difference between different cells.

In some possible implementations, the method further includes:

sending measurement assistance information to the network device, wherein the measurement assistance information includes a transmission delay difference between a satellite corresponding to a serving cell and a satellite corresponding to the neighbor cell to be measured.

In some possible implementations, the method further includes:

sending measurement assistance information to the network device, wherein the measurement assistance information includes location information of the user equipment, and wherein the location information of the user equipment is used by the network device to calculate a transmission delay difference between a satellite corresponding to a serving cell and a satellite corresponding to the neighbor cell to be measured according to the location information of the user equipment.

In some possible implementations, the SMTC of the neighbor cell to be measured corresponding to the same measurement object in the measurement configuration information is determined by the network device according to the corresponding transmission delay difference.

In some possible implementations, the method further includes:
receiving, from the network device, indication information indicating the user equipment to report the measurement assistance information.

In some possible implementations, receiving, from the network device, indication information indicating the user equipment to report the measurement assistance information includes:
receiving a radio resource control (RRC) signaling, a medium access control (MAC) signaling, or downlink control information including the indication information from the network device; wherein the indication information is used to indicate the user equipment to report the measurement assistance information.

In some possible implementations, offset values in the SMTCs of the different neighbor cells to be measured corresponding to the same measurement object in the measurement configuration information are different.

In some possible implementations, period values in the SMTCs of the different neighbor cells to be measured corresponding to the same measurement object in the measurement configuration information are the same or different.

In some possible implementations, duration values in the SMTCs of the different neighbor cells to be measured corresponding to the same measurement object in the measurement configuration information are the same or different.

In some possible implementations, measurement gap configurations for different neighbor cells to be measured corresponding to the same measurement object are different;
the measurement gap configuration includes:
a gap offset value, a gap length, a gap repetition period, a gap timing advance.

In a second aspect, there is provided a method for sending measurement configuration information. The method is performed by a user equipment, and includes:

sending measurement configuration information to a user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

In some possible implementations, the method further includes:
receiving measurement assistance information sent by the user equipment, wherein the measurement assistance information includes a transmission delay difference between a satellite corresponding to a serving cell and a satellite corresponding to the neighbor cell to be measured.

In some possible implementations, the method further includes:
receiving measurement assistance information sent by the user equipment, wherein the measurement assistance information includes location information of the user equipment;
calculating a transmission delay difference between a satellite corresponding to a serving cell and a satellite corresponding to the neighbor cell to be measured according to the location information of the user equipment.

In some possible implementations, the method further includes:
determining the SMTC of the neighbor cell to be measured corresponding to the same measurement object according to the transmission delay difference.

In some possible implementations, the method further includes:
sending, to the user equipment, indication information indicating the user equipment to report the measurement assistance information.

In some possible implementations, sending, to the user equipment, indication information indicating the user equipment to report the measurement assistance information includes:
sending a radio resource control (RRC) signaling, a medium access control (MAC) signaling, or downlink control information including the indication information to the user equipment; wherein the indication information is used to indicate the user equipment to report the measurement assistance information.

In some possible implementations, offset values in the SMTCs of the different neighbor cells to be measured corresponding to the same measurement object in the measurement configuration information are different.

In some possible implementations, period values in the SMTCs of the different neighbor cells to be measured corresponding to the same measurement object in the measurement configuration information are the same or different.

In some possible implementations, duration values in the SMTCs of the different neighbor cells to be measured corresponding to the same measurement object in the measurement configuration information are the same or different.

In some possible implementations, measurement gap configurations for different neighbor cells to be measured corresponding to the same measurement object are different;
the measurement gap configuration includes:
a gap offset value, a gap length, a gap repetition period, a gap timing advance.

In a third aspect, embodiments of the present disclosure provide a communication device. The communication device can be used to perform the steps performed by the network device in the first aspect or any possible design of the first aspect mentioned above. The network device can achieve various functions in the above methods through hardware structure, software modules, or hardware structure plus software modules.

When implementing the communication device shown in the third aspect through software modules, the communication device may include mutually coupled transceiver module and processing module, wherein the transceiver module can be used to support communication of the communication device, and the processing module can be used by the communication device to perform processing operations, such as generating information/messages to be sent or processing received signals to obtain information/messages.

When performing the steps described in the first aspect above, the transceiver module is configured to receive measurement configuration information from the network device; wherein the measurement configuration information includes more than one SSB-based measurement timing configuration (SMTC) corresponding to a same measurement object, and the SMTCs of different neighbor cells to be measured corresponding to the same measurement object are different; the processing module is configured to measure the neighbor cell corresponding to the measurement object according to the measurement configuration information.

In a fourth aspect, embodiments of the present disclosure provide a communication device. The communication device can be used to perform the steps performed by the user equipment in the second aspect or any possible design of the second aspect mentioned above. The user equipment can achieve various functions in the above methods through hardware structure, software modules, or hardware structure plus software modules.

When implementing the communication device shown in the fourth aspect through software modules, the communication device may include mutually coupled transceiver module and processing module, wherein the transceiver module can be used to support communication of the communication device, and the processing module can be used by the communication device to perform processing operations, such as generating information/messages to be sent or processing received signals to obtain information/messages.

When performing the steps described in the second aspect above, the transceiver module is configured to send measurement configuration information to a user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

In a fifth aspect, the present disclosure provides a communication system. The communication system may include a communication device as shown in the third aspect and a communication device as shown in the fourth aspect. The communication device shown in the third aspect may be composed of software modules and/or hardware components. The communication device shown in the fourth aspect can be composed of software modules and/or hardware components.

In a sixth aspect, the present disclosure provides a communication device, including a processor and a memory. The memory is configured to store a computer program. The processor is configured to execute the computer program, to implement any possible design of the first aspect or the first aspect.

In a seventh aspect, the present disclosure provides a communication device, including a processor and a memory. The memory is configured to store a computer program. The processor is configured to execute the computer program, to implement any possible design of the second aspect or the second aspect.

In an eighth aspect, the present disclosure provides a computer readable storage medium, storing instructions (or computer programs, programs) that, when called and executed on a computer, enable the computer to implement the first aspect or any possible design of the first aspect.

In a nineth aspect, present disclosure provides a computer readable storage medium, storing instructions (or computer programs, programs) that, when called and executed on a computer, enable the computer to implement the second aspect or any possible design of the second aspect.

With respect to the beneficial effects in the second to ninth aspects and their possible designs mentioned above, reference can be made to the description of the beneficial effects of the method described in the first aspect and any of its possible designs.

It should be understood that the general description above and the detailed description in the following text are only illustrative and explanatory, and cannot limit this disclosure.

It should be understood that the general description above and the detailed description in the following text are only illustrative and explanatory, and cannot limit this disclosure.

### BRIEF DESCRIPTION OF THE DRAWINGS

The accompanying drawings described here are intended to provide a further understanding of embodiments of the present disclosure and form a part of this application. The illustrative embodiments and their explanations of embodiments of the present disclosure are used to explain the embodiments of the present disclosure and do not constitute an improper limitation on embodiments of the present disclosure. In the attached drawings:

The accompanying drawings are incorporated into the specification and form a part of this specification, illustrating embodiments in accordance with the present disclosure and used together with the specification to explain the principles of the present disclosure.
Fig. 1 is a schematic diagram of a satellite communication method illustrated according to an exemplary embodiment;
Fig. 2 is a schematic diagram of a communication system illustrated according to an exemplary embodiment;
Fig. 3 is a schematic flowchart of transmitting measurement configuration information illustrated according to an exemplary embodiment;
Fig. 4 is a block diagram of an apparatus for sending measurement configuration information illustrated according to an exemplary embodiment;
Fig. 5 is a block diagram of another apparatus for sending measurement configuration information illustrated according to an exemplary embodiment;
Fig. 6 is a block diagram of an apparatus for receiving measurement configuration information illustrated according to an exemplary embodiment;
Fig. 7 is a block diagram of another apparatus for receiving measurement configuration information illustrated according to an exemplary embodiment.

### DETAILED DESCRIPTION

Further explanation of embodiments of the present disclosure is provided in conjunction with the accompanying drawings and specific implementations.

Here, a detailed explanation of exemplary embodiments will be provided, example of which are illustrated in the accompanying drawings. When the following description involves drawings, unless otherwise indicated, the same numbers in different drawings represent the same or similar elements. The embodiments described in the following exemplary embodiments do not represent all embodiments consistent with the present disclosure. On the contrary, they are only examples of apparatuses and methods consistent with some aspects of the present disclosure as detailed in the attached claims.

As shown in Fig. 2, the method for transmitting measurement configuration information provided in embodiments of the present disclosure can be applied to a wireless communication system 100, which may include a user equipment 101 and a network device 102. The user equipment 101 is configured to support carrier aggregation, and may be connected to multiple carrier units of the network device 102, including a primary carrier unit and one or more secondary carrier units.

It should be understood that the above wireless communication system 100 can be applied to both low-frequency and high-frequency scenarios. The application scenarios of the wireless communication system 100 include but are not limited to Long Term Evolution (LTE) systems, LTE Frequency Division Duplex (FDD) systems, LTE Time Division Duplex (TDD) systems, Worldwide Interoperability for Micro Wave Access (WiMAX) communication systems, Cloud Radio Access Network (CRAN) systems, future 5th Generation (5G) systems, and New Radio (NR) communication systems or future evolving public land mobile network (PLMN) systems.

The user equipment (UE) shown above may be a terminal, access terminal, terminal unit, terminal station, mobile station (MS), remote station, remote terminal, mobile terminal, wireless communication device, terminal agent, or user device. The user equipment 101 may have wireless transmission and reception functions, which can communicate with one or more network devices of one or more communication systems (such as wireless communication), and receive network services provided by network devices. The network device here includes but is not limited to the illustrated network device 102.

Here, the user equipment 101 may be a cellular phone, cordless phone, session initiation protocol (SIP) phone, wireless local loop (WLL) station, personal digital assistant (PDA) device, handheld device with wireless communication function, computing device or other processing device connected to wireless modem, in-vehicle device, wearable device, user device in future 5G network or evolving PLMN network, etc.

The network device 102 may be an access network device (or access website point). Here, the access network device refers to a device that provides network access functions, such as a radio access network (RAN) base stations etc. The network device 102 may specifically include a base station (BS), or include a base station and a radio resource management device for controlling the base station. The network device 102 may also include relay stations (relay devices), access points, and base stations in future 5G networks, base stations in future evolving PLMN networks, or NR base stations. The network device 102 may be a wearable device or a vehicle mounted device. The network device 102 may also be a communication chip with a communication module.

For example, the network device 102 includes but is not limited to: next-generation base stations (gnodeB, gNB) in 5G, evolved node B (eNB) in LTE systems, radio network controller (RNC), node B (NB) in WCDMA systems, wireless controllers in CRAN systems, base station controllers (BSC), base transceiver stations (BTS) in GSM or CDMA systems, home base stations (e.g., home evolved nodeB) Or home node B (HNB), baseband unit (BBU), transmitting and receiving point (TRP), transmission point (TP), or mobile switching center.

Embodiments of the present disclosure provide a method for transmitting measurement configuration information. Refer to Fig. 3, which is a flowchart of a method for transmitting measurement configuration information illustrated according to an exemplary embodiment. As shown in Fig. 3, the method includes followings.

In step S31, the network device 102 sends measurement configuration information to the user equipment. The measurement configuration information includes more than one SSB-based RRM measurement timing configuration (SMTC) corresponding to a same measurement object, and SMTCs of different neighbor cells to be measured corresponding to the same measurement object are different.

In step S32, the user equipment 101 receives the measurement configuration information from the network device 102.

In step S33, the user equipment 101 measures the neighbor cell to be measured corresponding to the measurement object according to the measurement configuration information.

In some possible implementations, the measurement object is the carrier corresponding to the cell.

In embodiments of the present disclosure, different SMTCs are set for different neighbor cells to be measured corresponding to the same measurement object, allowing the user equipment to measure different neighbor cells under the same carrier at different moments. Even when the transmission delay difference between different cells is large, the measurement of the neighbor cell can still be completed, thus overcoming the problem of inability to complete measurement of the neighbor cell due to the large transmission delay difference between different cells.

Embodiments of the present disclosure provide a method for receiving measurement configuration information. The method is performed by a user equipment, and includes:
step S1, receiving measurement configuration information from a network device, wherein the measurement configuration information includes more than one SSB-based measurement timing configuration (SMTC) corresponding to a same measurement object, and SMTCs of different neighbor cells to be measured corresponding to the same measurement object are different;
step S2, measuring the neighbor cell to be measured corresponding to the measurement object according to the measurement configuration information.

In some possible implementations, the SMTC includes offset value, period, and duration.

In embodiments of the present disclosure, different SMTCs are set for different neighbor cells to be measured corresponding to the same measurement object, allowing the user equipment to measure different neighbor cells under the same carrier at different moments. Even when the transmission delay difference between different cells is large, the measurement of the neighbor cell can still be completed, thus overcoming the problem of inability to complete measurement of the neighbor cell due to the large transmission delay difference between different cells.

Embodiments of the present disclosure provide a method for receiving measurement configuration information. The method is performed by a user equipment, and includes:
step S0, sending measurement assistance information to a network device, wherein the measurement assistance information includes a transmission delay difference between a satellite corresponding to a serving cell and a satellite corresponding to a neighbor cell to be measured;
step S1, receiving measurement configuration information from the network device, wherein the measurement configuration information includes more than one SSB-based measurement timing configuration (SMTC) corresponding to a same measurement object, and SMTCs of different neighbor cells to be measured corresponding to the same measurement object are different;
step S2, measuring the neighbor cell to be measured corresponding to the measurement object according to the measurement configuration information.

In some possible implementations, the SMTC of the neighbor cell to be measured corresponding to the same measurement object in the measurement configuration information is determined by the network device according to the corresponding transmission delay difference.

In some possible implementation, the offset value in the SMTC of the neighbor cell to be measured corresponding to the same measurement object in the measurement configuration information is determined by the network device according to the corresponding transmission delay difference.

Embodiments of the present disclosure provide a method for receiving measurement configuration information. The method is performed by a user equipment, and includes:
step S0, sending measurement assistance information to the network device, wherein the measurement assistance information includes location information of the user equipment, and wherein the location information of the user equipment is used by the network device to calculate a transmission delay difference between a satellite corresponding to a serving cell and a satellite corresponding to the neighbor cell to be measured according to the location information of the user equipment;
step S1, receiving measurement configuration information from the network device, wherein the measurement configuration information includes more than one SSB-based measurement timing configuration (SMTC) corresponding to a same measurement object, and SMTCs of different neighbor cells to be measured corresponding to the same measurement object are different;
step S2, measuring the neighbor cell to be measured corresponding to the measurement object according to the measurement configuration information.

In some possible implementations, the SMTC of the neighbor cell to be measured corresponding to the same measurement object in the measurement configuration information is determined by the network device according to the corresponding transmission delay difference.

In some possible implementation, the offset value in the SMTC of the neighbor cell to be measured corresponding to the same measurement object in the measurement configuration information is determined by the network device according to the corresponding transmission delay difference.

Embodiments of the present disclosure provide a method for receiving measurement configuration information. The method is performed by a user equipment, and includes:
step S0', receiving, from the network device, indication information indicating the user equipment to report the measurement assistance information;
step S0, sending measurement assistance information to the network device, wherein the measurement assistance information includes location information of the user equipment, and wherein the location information of the user equipment is used by the network device to calculate a transmission delay difference between a satellite corresponding to a serving cell and a satellite corresponding to the neighbor cell to be measured according to the location information of the user equipment;
step S1, receiving measurement configuration information from the network device, wherein the measurement configuration information includes more than one SSB-based measurement timing configuration (SMTC) corresponding to a same measurement object, and SMTCs of different neighbor cells to be measured corresponding to the same measurement object are different;
step S2, measuring the neighbor cell to be measured corresponding to the measurement object according to the measurement configuration information.

In some possible implementations, receiving, from the network device, indication information indicating the user equipment to report the measurement assistance information in step S0' includes: receiving a radio resource control (RRC) signaling, a medium access control (MAC) signaling, or downlink control information including the indication information from the network device; wherein the indication information is used to indicate the user equipment to report the measurement assistance information.

Embodiments of the present disclosure provide a method for receiving measurement configuration information. The method is performed by a user equipment, and includes:
step S1, receiving measurement configuration information from a network device, wherein the measurement configuration information includes more than one SSB-based measurement timing configuration (SMTC) corresponding to a same measurement object, and SMTCs of different neighbor cells to be measured corresponding to the same measurement object are different;
step S2, measuring the neighbor cell to be measured corresponding to the measurement object according to the measurement configuration information.

In some possible implementations, in the SMTCs of different neighbor cells to be measured corresponding to the same measurement object in the measurement configuration information, the offset values are different, and the period values are the same or different, and the duration values are the same or different.

In an example, the transmission delay difference between the serving cell and the target cell 1 (cell1) is d1, and the transmission delay difference between the serving cell and the target cell 2 (cell2) is d2. The SMTC configuration for cell1 is SMTC#1 {Offset1, Period1, Duration1 }, and the SMTC configuration for cell2 is SMTC#2 {Offset2, Period2, Duration2}. Here, Offset1 and Offset2 are different, and the values for Period1 and Period2 may be the same or different, and the values for Duration 1 and Duration2 may be the same or different.

In In some possible implementations, measurement gap configurations for different neighbor cells to be measured corresponding to the same measurement object are different;
the measurement gap configuration includes:
a gap offset value, a gap length, a gap repetition period, a gap timing advance.

Embodiments of the present disclosure provide a method for sending measurement configuration information. The method is performed by a network device 102, and includes:
step S30, sending measurement configuration information to a user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

In embodiments of the present disclosure, different SMTCs are set for different neighbor cells to be measured corresponding to the same measurement object, allowing the user equipment to measure different neighbor cells under the same carrier at different moments. Even when the transmission delay difference between different cells is large, the measurement of the neighbor cell can still be completed, thus overcoming the problem of inability to complete measurement of the neighbor cell due to the large transmission delay difference between different cells.

Embodiments of the present disclosure provide a method for sending measurement configuration information. The method is performed by a network device 102, and includes:
step S10, receiving measurement assistance information sent by a user equipment, wherein the measurement assistance information includes a transmission delay difference between a satellite corresponding to a serving cell and a satellite corresponding to a neighbor cell to be measured;
step S30, sending measurement configuration information to the user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

Embodiments of the present disclosure provide a method for sending measurement configuration information. The method is performed by a network device 102. The method includes:
step S10', receiving measurement assistance information sent by a user equipment, wherein the measurement assistance information includes location information of the user equipment;
step S20, calculating a transmission delay difference between a satellite corresponding to a serving cell and a satellite corresponding to the neighbor cell to be measured according to the location information of the user equipment;
step S30, sending measurement configuration information to the user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

Embodiments of the present disclosure provide a method for sending measurement configuration information. The method is performed by a network device, and includes:
step S10, receiving measurement assistance information sent by a user equipment, wherein the measurement assistance information includes a transmission delay difference between a satellite corresponding to a serving cell and a satellite corresponding to a neighbor cell to be measured;
step S30', determining the SMTC of the neighbor cell to be measured corresponding to the same measurement object according to the transmission delay difference;
step S30, sending measurement configuration information to the user equipment, wherein the measurement configuration information includes more than one SSB-based measurement timing configuration (SMTC) corresponding to the same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

Embodiments of the present disclosure provide a method for sending measurement configuration information. The method is performed by the network device 102, and includes:
step S10', receiving measurement assistance information sent by a user equipment, wherein the measurement assistance information includes location information of the user equipment;
step S20, calculating a transmission delay difference between a satellite corresponding to a serving cell and a satellite corresponding to a neighbor cell to be measured according to the location information of the user equipment;
step S30', determining the SMTC of the neighbor cell to be measured corresponding to the same measurement object according to the transmission delay difference;
step S30, sending measurement configuration information to the user equipment, wherein the measurement configuration information includes more than one SSB-based measurement timing configuration (SMTC) corresponding to the same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

Embodiments of the present disclosure provide a method for sending measurement configuration information. The method is performed by the network device 102, and includes:
step S10', sending, to a user equipment, indication information indicating the user equipment to report the measurement assistance information;
step S20', receiving measurement assistance information sent by the user equipment, wherein the measurement assistance information includes a transmission delay difference between a satellite corresponding to a serving cell and a satellite corresponding to the neighbor cell to be measured; or wherein the measurement assistance information includes location information of the user equipment; calculating a transmission delay difference between a satellite corresponding to a serving cell and a satellite corresponding to the neighbor cell to be measured according to the location information of the user equipment;
step S30', determining the SMTC of the neighbor cell to be measured corresponding to the same measurement object according to the transmission delay difference;
step S30, sending measurement configuration information to the user equipment, wherein the measurement configuration information includes more than one SSB-based measurement timing configuration (SMTC) corresponding to the same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

In some possible implementations, sending, to the user equipment, indication information indicating the user equipment to report the measurement assistance information in step S10' includes: sending a radio resource control (RRC) signaling, a medium access control (MAC) signaling, or downlink control information including the indication information to the user equipment; wherein the indication information is used to indicate the user equipment to report the measurement assistance information.

Embodiments of the present disclosure provide a method for sending measurement configuration information. The method is performed by the network device, and includes:
step S30, sending measurement configuration information to a user equipment, wherein the measurement configuration information includes more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

In some possible implementations, in the SMTCs of different neighbor cells to be measured corresponding to the same measurement object in the measurement configuration information, offset values are different, period values are the same or different, and duration values are the same or different.

In some possible implementations, measurement gap configurations for different neighbor cells to be measured corresponding to the same measurement object are different;
the measurement gap configuration includes:
a gap offset value, a gap length, a gap repetition period, a gap timing advance.

Based on the same concept as the above method embodiments, embodiments of the present disclosure also provide a communication device that can have the functions of the network device 102 in the above method embodiments, and can be used to perform the steps performed by the network device 102 provided in the above method embodiments. These functions can be implemented through hardware, or through software or through hardware executing corresponding software. The hardware or software includes one or more modules corresponding to the above functions.

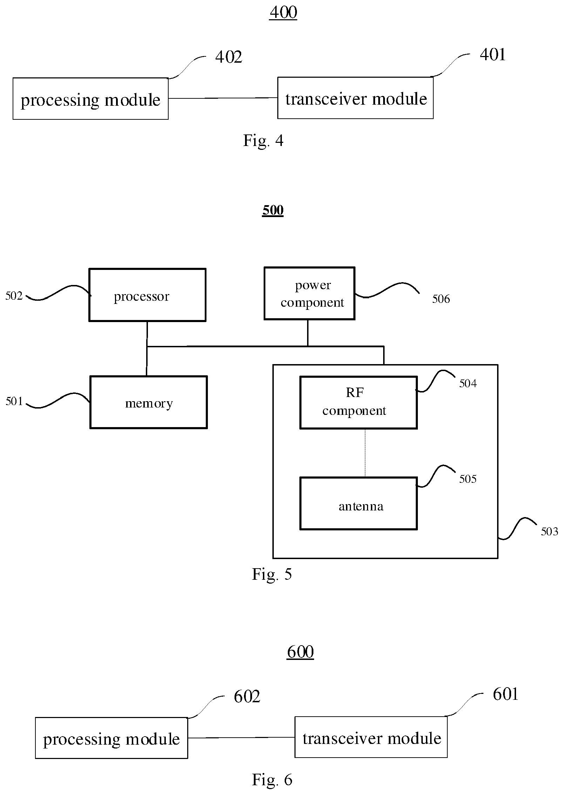

In one possible implementation, the communication device 400 shown in Fig. 4 can serve as the network device involved in the above method embodiments and perform the steps performed by the network device in the above method embodiment. As shown in Fig. 4, the communication device 400 may include a transceiver module 401 and a processing module 402, which are coupled with each other. The transceiver module 401 can be used to support communication of the communication device 400, and can have wireless communication functions, such as being able to communicate wirelessly with other communication devices through wireless air ports. The processing module 402 can be used to support the communication device 400 in executing the processing actions in the above method embodiments, including but not limited to: generating information and messages sent by the transceiver module 401, and/or demodulating and decoding the signals received by the transceiver module 401, and so on.

When executing the steps implemented by the network device 102, the transceiver module 401 is configured to send measurement configuration information to the user equipment; wherein the measurement configuration information includes more than one SSB-based measurement timing configuration (SMTC) corresponding to the same measurement object, and the SMTCs of different neighbor cells to be measured corresponding to the same measurement object are different; the measurement configuration information is used by the user equipment to measure the neighbor cell to be measured corresponding to the measurement object based on the measurement configuration information.

When the communication device is the network device 102, its structure may also be shown in Fig. 5. Take the base station as an example to illustrate the structure of the communication device. As shown in Fig. 5, the device 500 includes a memory 501, a processor 502, a transceiver component 503, and a power supply component 506. Here, the memory 501 is coupled with the processor 502 and can be used to store the programs and data necessary for the communication device 500 to achieve various functions. The processor 502 is configured to support communication device 500 in executing the corresponding functions in the above method, which can be achieved by calling programs stored in the memory 501. The transceiver component 503 may be a radio transceiver that can be used to support communication device 500 in receiving signals and/or data through wireless air ports, as well as sending signals and/or data. The transceiver component 503 may also be referred to as a transceiver unit or communication unit. The transceiver component 503 may include a radio frequency component 504 and one or more antennas 505, wherein the radio frequency component 504 may be a remote radio unit (RRU), which can be used for transmitting radio frequency signals and conversion between radio frequency signals and baseband signals. The one or more antennas 505 can be used for radiating and receiving radio frequency signals.

When the communication device 500 needs to send data, the processor 502 can perform baseband processing on the data to be sent and output a baseband signal to the RF unit. The RF unit processes the baseband signal and sends it in the form of electromagnetic waves through the antenna. When data is sent to the communication device 500, the RF unit receives the RF signal through the antenna, converts the RF signal into a baseband signal, and outputs the baseband signal to the processor 502. The processor 502 converts the baseband signal into data and processes the data.

Based on the same concept as the above method embodiments, embodiments of the present disclosure also provide a communication device that can have the functions of the user equipment 101 in the above method embodiments, and can be used to perform the steps performed by the user equipment 101 provided in the above method embodiments. These functions can be implemented through hardware, or through software or through hardware executing corresponding software. The hardware or software includes one or more modules corresponding to the above functions.

In one possible implementation, the communication device 600 shown in Fig. 6 can serve as the user equipment involved in the above method embodiments and perform the steps performed by the user equipment in the above method embodiment. As shown in Fig. 6, the communication device 600 may include a transceiver module 601 and a processing module 602, which are coupled with each other. The transceiver module 601 can be used to support communication of the communication device 600, and can have wireless communication functions, such as being able to communicate wirelessly with other communication devices through wireless air ports. The processing module 602 can be used to support the communication device 600 in executing the processing actions in the above method embodiments, including but not limited to: generating information and messages sent by the transceiver module 601, and/or demodulating and decoding the signals received by the transceiver module 601, and so on.

When executing the steps implemented by the user equipment 101, the transceiver module 601 is configured to receive measurement configuration information from the network device; wherein the measurement configuration information includes more than one SSB-based measurement timing configuration (SMTC) corresponding to the same measurement object, and the SMTCs of different neighbor cells to be measured corresponding to the same measurement object are different; the processing module 602 is configured to measure the neighbor cell to be measured corresponding to the measurement object based on the measurement configuration information.

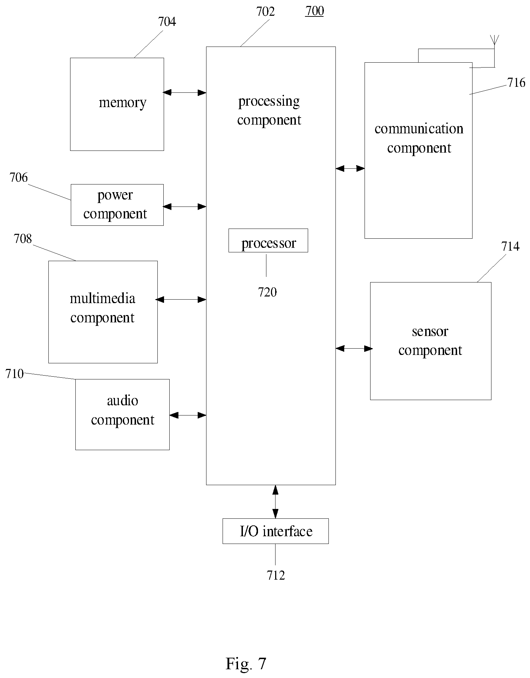

When the communication device is the user equipment 101, its structure may also be shown in Fig. 7. The device 700 may be a smartphone, a computer, a digital broadcasting terminal, a massage transmitter/receiver, a tablet device, a game console, a medical device, a fitness device, a personal digital assistant, etc.

Referring to Fig. 7, the device 700 may include one or more of the following components: a processing component 702, a memory 704, a power component 706, a multimedia component 308, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. When the device 700 is in an operation mode, such as a shooting mode or a video mode, the front camera and/or the rear camera can receive external multimedia data. Each front camera and rear camera can be a fixed optical lens system or have focal length and optical zoom capabilities.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker for outputting audio signals.

The I/O interface 712 provides an interface between the processing component 702 and peripheral interface modules, such as a keyboard, a click wheel, buttons, and the like. The buttons may include but are not limited to: home button, volume button, start button, and lock button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of a target object contact with the device 700, an orientation or an acceleration/deceleration of the device 700, and a change in temperature of the device 700. The sensor assembly 714 may include a proximity sensor configured to detect the presence of nearby objects without any physical contact. The sensor component 714 may also include a light sensor, such as a CMOS or CCD image sensor, applicable for imaging applications. In some embodiments, the sensor component 714 may also include an acceleration sensor, a gyroscope sensor, a magnetic sensor, a pressure sensor or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In exemplary embodiments, there is also provided a non-transitory computer readable storage medium such as a memory 704 storing instructions, which may be executed by a processor 720 of the device 700 to implement the method mentioned above. For example, the non-transitory readable storage medium may be a ROM, a RAM, a CD-ROM, a magnetic tape, a floppy disc, an optical data storage device, and the like.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

### Industrial practicality

Different SMTCs are set for different neighbor cells to be measured corresponding to the same measurement object, allowing the user equipment to measure different neighbor cells under the same carrier at different moments. Even when there is a large transmission delay difference between different cells, the measurement of neighbor cell can still be completed, thus overcoming the problem of being unable to complete the measurement of neighbor cell due to the large transmission delay difference between different cells.

## Claims

1. A method for receiving measurement configuration information, performed by a user equipment, comprising:
receiving measurement configuration information from a network device, wherein the measurement configuration information comprises more than one SSB-based measurement timing configuration (SMTC) corresponding to a same measurement object, and SMTCs of different neighbor cells to be measured corresponding to the same measurement object are different;
measuring the neighbor cell to be measured corresponding to the measurement object according to the measurement configuration information.

2. The method of claim 1, further comprising:
sending measurement assistance information to the network device, wherein the measurement assistance information comprises a transmission delay difference between a satellite corresponding to a serving cell and a satellite corresponding to the neighbor cell to be measured.

3. The method of claim 1, further comprising:
sending measurement assistance information to the network device, wherein the measurement assistance information comprises location information of the user equipment, and wherein the location information of the user equipment is used by the network device to calculate a transmission delay difference between a satellite corresponding to a serving cell and a satellite corresponding to the neighbor cell to be measured according to the location information of the user equipment.

4. The method of claim 2 or 3, wherein
the SMTC of the neighbor cell to be measured corresponding to the same measurement object in the measurement configuration information is determined by the network device according to the corresponding transmission delay difference.

5. The method of claim 2 or 3, further comprising:
receiving, from the network device, indication information indicating the user equipment to report the measurement assistance information.

6. The method of claim 2, wherein receiving, from the network device, indication information indicating the user equipment to report the measurement assistance information comprises:
receiving a radio resource control (RRC) signaling, a medium access control (MAC) signaling, or downlink control information comprising the indication information from the network device; wherein the indication information is used to indicate the user equipment to report the measurement assistance information.

7. The method of claim 1, wherein
offset values in the SMTCs of the different neighbor cells to be measured corresponding to the same measurement object in the measurement configuration information are different.

8. The method of claim 7, wherein
period values in the SMTCs of the different neighbor cells to be measured corresponding to the same measurement object in the measurement configuration information are the same or different.

9. The method of claim 7, wherein
duration values in the SMTCs of the different neighbor cells to be measured corresponding to the same measurement object in the measurement configuration information are the same or different.

10. The method of claim 1, wherein
measurement gap configurations for different neighbor cells to be measured corresponding to the same measurement object are different;
the measurement gap configuration comprises: a gap offset value, a gap length, a gap repetition period, a gap timing advance.

11. A method for sending measurement configuration information, performed by a network device, comprising:
sending measurement configuration information to a user equipment, wherein the measurement configuration information comprises more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

12. The method of claim 11, further comprising:
receiving measurement assistance information sent by the user equipment, wherein the measurement assistance information comprises a transmission delay difference between a satellite corresponding to a serving cell and a satellite corresponding to the neighbor cell to be measured.

13. The method of claim 12, further comprising:
receiving measurement assistance information sent by the user equipment, wherein the measurement assistance information comprises location information of the user equipment;
calculating a transmission delay difference between a satellite corresponding to a serving cell and a satellite corresponding to the neighbor cell to be measured according to the location information of the user equipment.

14. The method of claim 12 or 13, further comprising:
determining the SMTC of the neighbor cell to be measured corresponding to the same measurement object according to the transmission delay difference.

15. The method of claim 12 or 13, further comprising:
sending, to the user equipment, indication information indicating the user equipment to report the measurement assistance information.

16. The method of claim 15, wherein sending, to the user equipment, indication information indicating the user equipment to report the measurement assistance information comprises:
sending a radio resource control (RRC) signaling, a medium access control (MAC) signaling, or downlink control information comprising the indication information to the user equipment; wherein the indication information is used to indicate the user equipment to report the measurement assistance information.

17. The method of claim 11, wherein
offset values in the SMTCs of the different neighbor cells to be measured corresponding to the same measurement object in the measurement configuration information are different.

18. The method of claim 17, wherein
period values in the SMTCs of the different neighbor cells to be measured corresponding to the same measurement object in the measurement configuration information are the same or different.

19. The method of claim 17, wherein
duration values in the SMTCs of the different neighbor cells to be measured corresponding to the same measurement object in the measurement configuration information are the same or different.

20. The method of claim 11, wherein
measurement gap configurations for different neighbor cells to be measured corresponding to the same measurement object are different;
the measurement gap configuration comprises: a gap offset value, a gap length, a gap repetition period, a gap timing advance.

21. A communication device, comprising:
a transceiver module, configured to receive measurement configuration information from a network device, wherein the measurement configuration information comprises more than one SSB-based measurement timing configuration (SMTC) corresponding to a same measurement object, and SMTCs of different neighbor cells to be measured corresponding to the same measurement object are different;
a processing module, configured to measure the neighbor cell to be measured corresponding to the measurement object according to the measurement configuration information.

22. A communication device, comprising:
a transceiver module, configured to send measurement configuration information to a user equipment, wherein the measurement configuration information comprises more than one SSB-based measurement timing configuration (SMTC) corresponding to a same measurement object, and SMTCs of different neighbor cells to be measured corresponding to the same measurement object are different; and the measurement configuration information is used by the user equipment to measure the neighbor cell to be measured corresponding to the measurement object according to the measurement configuration information.

23. A communication device, comprising a processor and a memory;
the memory is configured to store a computer program;
the processor is configured to execute the computer program, to implement the method of any of claims 1-10.

24. A communication device, comprising a processor and a memory;
the memory is configured to store a computer program;
the processor is configured to execute the computer program, to implement the method of any of claims 11-20.

25. A computer readable storage medium, storing instructions that, when called and executed on a computer, enable the computer to implement the method of any of claims 1-10.

26. A computer readable storage medium, storing instructions that, when called and executed on a computer, enable the computer to implement the method of any of claims 11-20.
